# EUROPÄISCHE PATENTANMELDUNG

(11) **EP 1 116 988 A2**
(43) Veröffentlichungstag der Anmeldung: **18.07.2001**
(21) Anmeldenummer: 01200012.1
(22) Anmeldetag: 05.01.2001
(51) Int. Cl.: G02F 1/13357, G02F 1/1335

(54) **Flüssigkristallbildschirm mit fluoreszierender Frontplatte**

(30) Priorität: 14.01.2000 DE 10001189
(71) Anmelder: Philips Corporate Intellectual Property GmbH, 52064 Aachen (DE); Koninklijke Philips Electronics N.V., 5621 BA Eindhoven (NL)
(72) Erfinder: Bechtel,Helmut,Dr., c/o Philips Corp.Int.Prop.GmbH, 52064 Aachen (DE); Nikol,Hans,Dr., c/o Philips Corp.Int.Prop.GmbH, 52064 Aachen (DE); Ronda,Crnelis,Dr., c/o Philips Corp.Int.Prop.GmbH, 52064 Aachen (DE)
(74) Vertreter: Volmer, Georg, Dipl.-Ing.

(57) **Zusammenfassung**

Flüssigkristallbildschirm, ausgerüstet mit einer Flüssigkristallschicht, zwei parallelen transparenten Substraten, die die Flüssigkristallschicht flankieren, einem Mittel zur Beeinflussung des Transmissionszustandes der Flüssigkristallschicht, einer blau-emittierenden Strahlungsquelle für Strahlung mit einer maximalen Emission bei einer Wellenlänge 400 < λ₁ < 450 nm auf der Seite des ersten Substrates, und einer ersten Leuchtstoffschicht mit mindestens einem Leuchtstoff auf dem zweiten Substrat.

## Beschreibung

Die Erfindung betrifft einen Flüssigkristallbildschirm, ausgerüstet mit einer Flüssigkristallschicht, zwei parallelen transparenten Substraten, die die Flüssigkristallschicht flankieren, einem Mittel zur Beeinflussung des Transmissionszustandes der Flüssigkristallschicht, einer Strahlungsquelle auf der Seite des ersten Substrates und einer Leuchtstoffschicht, die mindestens einen Leuchtstoff enthält, auf dem zweiten Substrat.

In Flüssigkristallbildschirmen wird die Tatsache ausgenutzt, dass sich die Molekülorientierung einiger Klassen von Flüssigkristallen durch Anlegen eines elektrischen Feldes so steuern lässt, dass von außen auffallendes linear polarisiertes Licht in seiner Polarisationsrichtung beeinflusst wird. Die verschiedenen Klassen von Flüssigkristallen umfassen nematische, cholesterische und verschiedenen Arten smektischer Phasen, die jeweils durch eine unterschiedliche räumliche Anordnung der Moleküle gekennzeichnet sind. Beispielsweise enthalten die weit verbreiteten TN-Flüssigkristallbildschirme (TN = twisted nematic) nematische Flüssigkristalle.

Ein konventionellen TN-Flüssigkristallbildschirm besteht üblicherweise aus zwei Glasplatten, die jeweils an ihren Innenseiten mit einer transparenten Elektrode aus Indium-Zinn-Oxid (ITO) beschichtet sind. Dazwischen ist eine Schicht, die die Flüssigkristalle enthält, angeordnet. Den nematischen Flüssigkristallmolekülen wird durch Orientierungsschichten auf den Glasplatten eine um 90° zwischen beiden Glasplatten verdrehte Randorientierung aufgezwungen. Dadurch stellt sich in der Flüssigkristallschicht eine 90° - Helix ein. Gekreuzte Polarisatoren auf den Außenflächen der Glasplatten und eine flächige Hintergrundbeleuchtung vervollständigen den Bildschirm. Solange an den beiden ITO-Elektroden keine elektrische Spannung anliegt, kann das vom ersten Polarisator linear polarisierte Licht der Hintergrundbeleuchtung der 90°-Verdrehung der Flüssigkristallmoleküle folgen und anschließend den zweiten Polarisator passieren; der Bildschirm erscheint hell. Beim Anlegen einer genügend hohen Spannung wird durch die elektrische Anisotropie der Flüssigkristallmoleküle die Helix aufgehoben und die Polarisationsrichtung des polarisierten Lichtes bleibt unbeeinflusst. Das polarisierte Licht wird am zweiten Polarisator geblockt und die Zelle erscheint dunkel.

Ein komplettes Schirmbild ist aus einer Vielzahl von einzelnen Bildpunkten zusammengesetzt, die jeweils über eine Matrix angesteuert werden. Ein farbiges Schirmbild entsteht in konventionellen Flüssigkristallfarbbildschirmen durch Mosaikfarbfilter, die auf die frontseitige Glasplatte aufgedruckt sind. Das durchfallende Licht von jedem Bildpunkt leuchtet entweder den Farben Rot oder Grün oder Blau.

Eine Nachteil der Flüssigkristallfarbbildschirme mit Farbfiltern ist es, dass der Bildschirm nur unter bestimmten Blickwinkeln betrachtet werden kann und dass Farbsättigung, Leuchtkraft und Helligkeit deutlich unter denen von CRT-Bildschirmen liegen.

Höhere Leuchtkraft und einen größeren Betrachtungswinkel haben Flüssigkristallfarbbildschirme, die eine Leuchtstoffschicht umfassen. Beispielsweise ist aus US 4 822 144 ein Flüssigkristallfarbbildschirm bekannt, der im Transmissionsmodus betrieben wird und auf einer Kombination von Flüssigkristallschaltelementen und einer Leuchtstoffschicht beruht, wobei die Leuchtstoffschicht von einer UV-Lichtquelle angeregt wird und die Helligkeit des Bildschirms durch ein Interferenzfilter zwischen Lichtquelle und Leuchtstoffschicht erhöht wird. Leuchtstoffschicht und UV-Quelle können an zwei, voneinander abgewandten Seiten der Flüssigkristallschaltelemente liegen. Die UV-Quelle kann eine Quecksilber-Hochdrucklampe, die mit einer maximalen Emission zwischen 360 und 380 nm abstrahlt, oder eine Quecksilber-Niederdrucklampe, die Licht mit einer maximalen Emission bei 185.0 und 253.7 nm abstrahlt, gewählt werden.

Es ist ein Nachteil einer Hintergrundbeleuchtung mittels einer Quecksilber-Hochdrucklampe, die eine maximale Emission bei Wellenlängen zwischen 360 und 380 nm hat, dass neben den kurzwelligen Anteilen auch Licht mit beträchtlicher Intensität bei 408, 435 und 546 nm emittiert wird. Dies führt zu einer unvollständigen Aufspaltung in die drei Primärfarben Rot, Grün und Blau in den Leuchtstoffen und zu chromatischer Aberration des auf dem Bildschirm erzeugten Farbbildes.

Andererseits ist es ein Nachteil einer Hintergrundbeleuchtung mittels einer Quecksilber Niederdrucklampe mit einer maximalen Emission bei einer Wellenlänge von 185,0 und 253,7 nm, dass Licht dieser Wellenlänge im Flüssigkristall absorbiert wird und zu photochemischen Reaktionen in dem Flüssigkristall führen, die ihn mit der Zeit zerstören können.

Es ist die Aufgabe der vorliegenden Erfindung, einen Flüssigkristallbildschirm zur Verfügung zu stellen, der ein farbreines Bild liefert und eine lange Lebensdauer hat.

Erfindungsgemäß wird die Aufgabe gelöst durch einen Flüssigkristallbildschirm, ausgerüstet mit einer Flüssigkristallschicht, zwei parallelen transparenten Substraten, die die Flüssigkristallschicht flankieren, einem Mittel zur Beeinflussung des Transmissionszustandes der Flüssigkristallschicht, einer blau-emittierenden Strahlungsquelle für Strahlung mit einer maximalen Emission bei einer Wellenlänge 400 < λ₁ < 450 nm auf der Seite des ersten Substrates, und einer ersten Leuchtstoffschicht mit mindestens einem Leuchtstoff auf dem zweiten Substrat.

Durch die Verwendung einer blau emittierenden Strahlungsquelle anstatt einer UV-emittierenden Strahlungsquelle werden photochemische Reaktionen der Strahlung aus der Hintergrundbeleuchtung mit der Flüssigkristallschicht vermieden. Weiterhin können für die Komponenten des Flüssigkristallbildschirms billigere Materialien verwendet werden, die transparent für sichtbares Licht, aber nicht transparent für UV-Licht sein müssen.

Nach einer bevorzugten Ausführungsform der Erfindung umfasst die blau-emittierende Strahlungsquelle eine Leuchtstofflampe mit einer blau-emittierender Leuchtstoffschicht.

Es kann auch bevorzugt sein, dass die blaue Strahlungsquelle eine blau-emittierende Leuchtdiode umfasst.

In einer Variante der Erfindung kann vorgesehen sein, dass die erste Leuchtstoffschicht einen roten Leuchtstoff, einen grünen Leuchtstoff und ein blaues Farbfilter umfasst.

Es ist bevorzugt, dass die erste Leuchtstoffschicht als roten Leuchtstoffo-(6-Diethylamino-3-diethylimino-3H-xanthe-9-yl)benzoesäure, als grünen Leuchtstoff 3-(2'-Benzothiazolyl)-7-diethylaminocoumarin und als blaues Farbfilter CoAl₂O₄ enthält.

In einer weiteren Variante der Erfindung kann zwischen der Flüssigkristallschicht und der ersten Leuchtstoffschicht eine zweite Leuchtstoffschicht angeordnet sein. eine derartige zweite Leuchtstoffschicht kann als Farbwandlerschicht wirken.

Nachfolgend wird die Erfindung von drei Figuren weiter erläutert.

Fig. 1 zeigt einen Schnitt durch einen Flüssigkristallbildschirm nach einer Ausführungsform der Erfindung mit einer Leuchtstoffschicht mit einzelnen Bildpunkten.

Fig. 2 zeigt einen Schnitt durch einen Flüssigkristallbildschirm nach einer Ausführungsform der Erfindung mit einer kontinuierlichen Leuchtstoffschicht.

Fig. 3 zeigt einen Schnitt durch einen Flüssigkristallbildschirm nach einer Ausführungsform der Erfindung mit zwei Leuchtstoffschichten mit einzelnen Bildpunkten.

Ein Flüssigkristallbildschirm nach der Erfindung ist ausgerüstet mit einer Flüssigkristallschichtl, zwei parallelen transparenten Substraten 2 und 3, die die Flüssigkristallschicht 1 flankieren, einem Mittel zur Beeinflussung des Transmissionszustandes der Flüssigkristallschicht 4 und 5, einer blau-emittierenden Strahlungsquelle 7 für Strahlung mit einer maximalen Emission bei einer Wellenlänge 400 < λ₁ < 450 nm auf der Seite des ersten Substrates, und einer ersten Leuchtstoffschicht 8 mit mindestens einem Leuchtstoff auf dem zweiten Substrat.

Die beiden Substrate bilden den Grundkörper des Flüssigkristallbildschirms. Sie sind transparent für sichtbares Licht. Nach einer Ausführungsform der Erfindung können die beiden Substrate aus Glas oder einem transparenten Kunststoff bestehen. Die Substrate sind an ihrer Peripherie mit einer Dichtung verschlossen. Die Substrate und die Dichtung schließen einen Raum ein, der durch die Flüssigkristallschicht gefüllt ist.

Für die Flüssigkristallschicht können verschiedene Flüssigkristallmaterialien gewählt werden. Zum Beispiel kann ein "twisted nematic"-Material mit einer Drehung von 90° für ein TN-LCD oder ein "super twisted nematic"-Material mit einer Drehung von 180 bis 270° für ein STN-LCD gewählt werden oder aber ein doppelbrechendes Material mit einer Drehung von 270° ("super twisted birefringence") für ein SBE-LCD. Auch ferroelektrische, smektische und cholesterische Flüssigkristallmaterialien können geeignet sein.

Hinsichtlich der Mittel, mit dem der Transmissionszustand der Flüssigkristallschicht beeinflusst werden kann, unterschiedet man zwischen einer Ansteuerung durch eine passive oder eine aktiven Matrix. Bei Flüssigkristallbildschirmen mit aktiver Matrix (AM-LCD) ist jedem Bildelement (Pixel) ein eigener Schalter zugeordnet, der aus einem Dünnfilmtransistor (TFT) oder einer Dünnfilmdiode (TFD) bestehen kann. Auch die Ansteuerung durch Plasmaentladungen nach der PALC-Technologie gehört zu den Ansteuerungen durch eine Aktivmatrix und kann für die erfindungsgemäßen Flüssigkristallbildschirme verwendet werden. Flüssigkristallbildschirme mit aktiver Matrix zeigen insgesamt einen besseren Kontrast und höhere Farbsättigung und haben eine niedrigere Ansprechzeit.

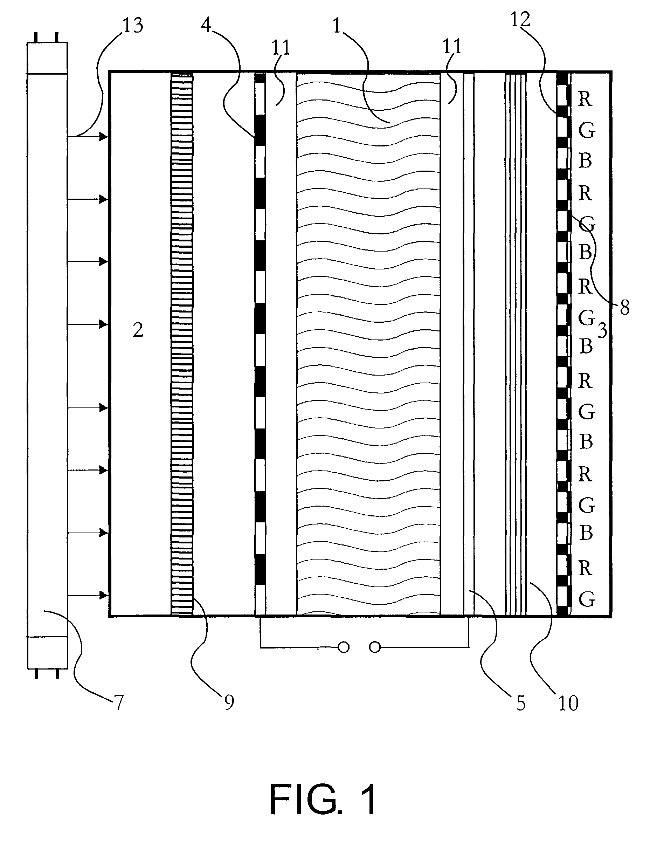

Die Mehrzahl der derzeit weltweit produzierten Flüssigkristallbildschirme werden durch eine passive Matrix angesteuert. Wie in Fig. 1 gezeigt, werden dafür die Oberflächen der Substrate, die in Berührung mit der Flüssigkristallschicht stehen, mit Arrays aus transparenten, streifenförmigen Elektroden 4 und 5 beschichtet, die sich senkrecht überschneiden und eine Matrix von Schaltungspunkten bilden. Die Elektroden können zum Beispiel aus ITO bestehen. Die Elektroden sind mit einer Orientierungsschicht 11 aus orientiert abgeschiedenen (obliquely evaporated) Siliciumdioxid bedeckt. Weiterhin ist auf dem ersten Substrat ein Polarisator 9 und auf dem zweiten Substrat ein Analysator 10 angeordnet.

Als Strahlungsquelle ist eine Quecksilber-Niederdrucklampe 7 mit einer Leuchtstoffschicht, die ausschließlich einen blau-emittierenden Leuchtstoff, z. B. BaMgAl₁₀O₁₇:Eu, enthält und blaues Licht mit einer Wellenlänge von 447 nm ausstrahlt, auf der Seite des Substrates 2 angeordnet. Alternativ kann auch eine blau-emittierende UV-Diode als Strahlungsquelle verwendet werden.

Zwischen der Strahlungsquelle und dem Mittel zur Beeinflussung des Transmissionszustandes der Flüssigkristallschicht kann ein Kollimator angebracht werden, um Kontrast, Farbreinheit und Effizienz des Flüssigkristallbildschirms zu verbessern.

Das frontseitige Substrat 3 auf der dem Betrachter zugewandten Seite ist auf der an die Flüssigkristallschicht angrenzenden Oberfläche oder auf der äußeren Oberfläche mit einer ersten Leuchtstoffschicht ausgestattet.

Die erste Leuchtstoffschicht setzt sich aus einem Mosaikmuster von roten, grünen und blauen Bildelementen mit einem roten und einem grünen Leuchtstoff und mit einem blau streuenden Pigment zusammen, die jeweils einem Schaltungspunkt zugeordnet sind und Licht in Rot und Grün emittieren und in Blau transmittieren, wenn sie von dem blauen Licht, das von der Hintergrundbeleuchtung ausgestrahlt wird, angeregt werden.

Die als Leuchtstoffe in Frage kommenden Materialien müssen die eintretende monochrome blaue Strahlung absorbieren und in einem geeigneten Wellenlängenbereich emittieren und eine hohe Fluoreszenzquantenausbeute erreichen. Besonders geeignet sind die anorganischen Calciumsulfid-Leuchtstoffe: CaS:Eu als rot emittierender Leuchtstoff und CaS:Ce als grün emittierender Leuchtstoff. Als blaues, streuendes Pigment ist CoAl₂O₄ geeignet. Als effiziente Leuchtstoffe zur Erzeugung von sichtbarem farbigen Lichtes aus blauem Licht können auch organische Leuchtstoffe verwendet werden: für den roten Bereich o-(6-Diethylamino-3-diethylimino-3H-xanthe-9-yl)benzoesäure und für den grünen Bereich 3-(2'-Benzothiazolyl)-7-diethylaminocoumarin.

Es kann eine einzige Leuchtstoffschicht oder einer Sandwich-Anordnung aus zwei Leuchtstoffschichten zur Anwendung kommen.

In der ersten Leuchtstoffschicht können die Bildpunkte in der üblichen Art und Weise als Punkte oder Streifen für das Farbtripel Rot, Grün, Blau aufgebracht werden.

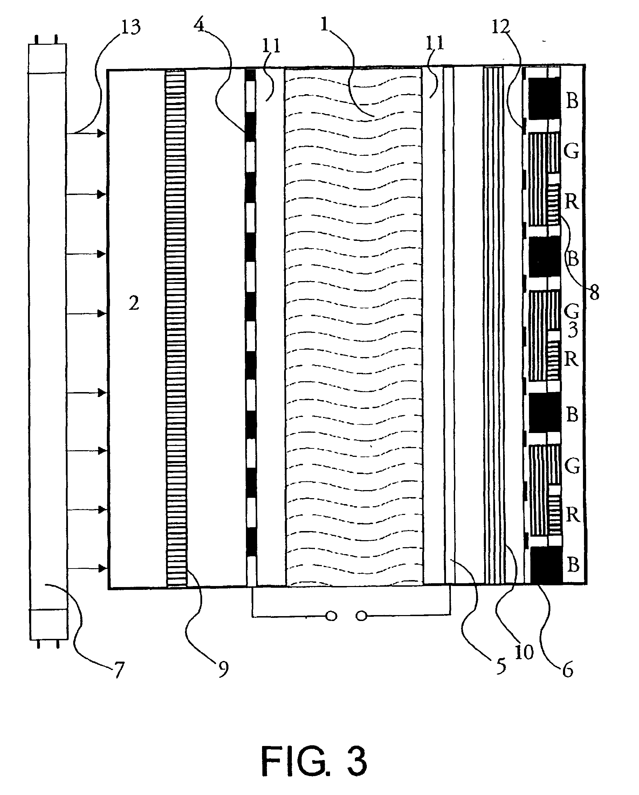

Wenn der Flüssigkristallbildschirm mit einer zweiten Leuchtstoffschicht ausgestattet ist, kann die zweite Leuchtstoffschicht wie in Fig. 3 gezeigt über den grünen und den roten Bildpunkten der ersten Leuchtstoffschicht grüne Bildpunkte enthalten, die als Farbwandler für die Strahlung der Hintergrundbeleuchtung wirken. Für die rot emittierenden Bildpunkte der ersten Schicht wird als roter Leuchtstoff o-(6-Diethylamino-3-diethylimino-3H-xanthe-9-yl)benzoesäure verwendet, für die grünen Leuchtpunkte in der ersten und zweiten Schicht wird als grüner Leuchtstoff 3-(2'-Benzothiazolyl)-7-diethylaminocoumarin verwendet. Für die blauen Leuchtpunkte der ersten Schicht wird als blaues Farbfilter CoAl₂O₄verwendet. Das grüne Fluoreszenzlicht des 3-(2'-Benzothiazolyl)-7-diethylaminocoumarins wird durch o-(6-Diethylamino-3-diethylimino-3H-xanthe-9-yl)benzoesäure in rotes Fluoreszenzlicht transformiert. Die Anregung durch das langwellige Fluoreszenzlicht des grünen Leuchtstoffes vermeidet eine Photoreaktion in dem roten Leuchtstoff und verlängert dessen Lebensdauer.

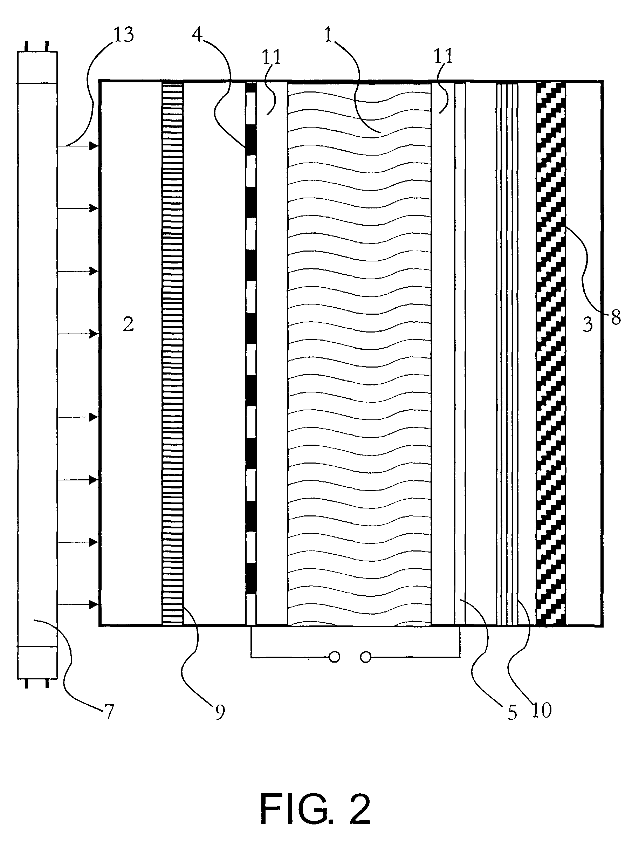

Für einen monochromen Flüssigkristallbildschirm wird, wie in Fig. 2 gezeigt, eine kontinuierliche Leuchtstoffschicht verwendet, die eine Mischung aus einem roten und einem grünen Leuchtstoff enthält und einen Teil des blauen Lichtes aus der Strahlungsquelle transmittiert. Dadurch wird ein weißer Farbpunkt erzielt.

Die Bildelemente können weiterhin durch eine schwarze Matrix 12 umrandet werden, um Kontrast und Farbreinheit zu verbessern.

Auch durch Einfärbung des frontseitigen Substrates 3 ist es möglich, den Kontrast bei Umgebungslicht zu verbessern.

Im Betrieb wird entsprechend dem gewünschten Bild eine Spannung zwischen den beiden Elektroden-Arrays angelegt. In dem Teil der Flüssigkristallschicht, der zwischen nicht geschalteten Schaltungspunkten liegt, haben die Flüssigkristallmoleküle eine verdrillte Struktur mit einer Drehung von 90° über den Querschnitt der Zelle. In dem Teil der Flüssigkristallschicht, der zwischen geschalteten Schaltungspunkten liegt, haben die Flüssigkristallmoleküle eine gestreckte Struktur ohne oder mit nur geringfügiger Drehung über den Querschnitt der Zelle.

Die unpolarisierte blaue Strahlung mit einer Wellenlänge 400 nm< λ₁ < 450 nm, das von der Quecksilber-Niederdrucklampe 7 erzeugt wird, durchquert an den Stellen in der Flüssigkristallschicht, an den keine Spannung angelegt ist, den Polarisator, das Flüssigkristallmedium und den Analysator und trifft in der Leuchtstoffschicht auf einen roten, grünen oder blauen Bildpunkt. Die Bildpunkte in der Leuchtstoffschicht sind den Schaltungspunkten der Ansteuerung zugeordnet und an ihnen ausgerichtet. Die durch das blaue Licht angeregten roten und grünen Leuchtstoffe und das blaue Pigment strahlen dann sichtbares Licht in einer der Farben Rot, Grün oder Blau aus.

## Patentansprüche

1. Flüssigkristallbildschirm, ausgerüstet mit einer Flüssigkristallschicht, zwei parallelen transparenten Substraten, die die Flüssigkristallschicht flankieren, einem Mittel zur Beeinflussung des Transmissionszustandes der Flüssigkristallschicht, einer blau-emittierenden Strahlungsquelle für Strahlung mit einer maximalen Emission bei einer Wellenlänge 400 < λ₁ < 450 nm auf der Seite des ersten Substrates, und einer ersten Leuchtstoffschicht mit mindestens einem Leuchtstoff auf dem zweiten Substrat.

2. Flüssigkrisrallbildschirm gemäß Anspruch 1,
dadurch gekennzeichnet,
dass die blau-emittierende Strahlungsquelle eine Leuchtstofflampe mit blau emittierender Leuchtstoffschicht umfasst.

3. Flüssigkristallbildschirm gemäß Anspruch 1,
dadurch gekennzeichnet,
dass die blau-emittierende Strahlungsquelle eine blau-emittierende Leuchtdiode umfasst.

4. Flüssigkristallbildschirm gemäß Anspruch 1,
dadurch gekennzeichnet,
dass die erste Leuchtstoffschicht einen roten Leuchtstoff, einen grünen Leuchtstoff und ein blaues Farbfilter umfasst.

5. Flüssigkristallbildschirm gemäß Anspruch 1,
dadurch gekennzeichnet,
dass die erste Leuchtstoffschicht als roten Leuchtstoff o-(6-Diethylamino-3-diethylimino-3H-xanthe-9-yl)benzoesäure, als grünen Leuchtstoff 3-(2'-Benzothiazolyl)-7-diethylaminocoumarin und als blaues Farbfilter CoAl₂O₄ enthält.

6. Flüssigkristallbildschirm gemäß Anspruch 1,
dadurch gekennzeichnet,
dass zwischen der Flüssigkristallschicht und der ersten Leuchtstoffschicht eine zweite Leuchtstoffschicht angeordnet ist.
